# EUROPÄISCHE PATENTSCHRIFT

(11) **EP 2 486 276 B1**
(45) Veröffentlichungstag und Bekanntmachung des Hinweises auf die Patenterteilung: **11.03.2015**
(21) Anmeldenummer: 10744874.8
(22) Anmeldetag: 31.07.2010
(51) Int. Cl.: F03D 11/02, F03D 11/00

(54) **ANTRIEBSSTRANG UND WINDKRAFTANLAGE**
DRIVE TRAIN AND WIND TURBINE
CHAÎNE CINÉMATIQUE ET ÉOLIENNE

(30) Priorität: 08.10.2009 DE 102009048766
(43) Veröffentlichungstag der Anmeldung: 15.08.2012
(73) Patentinhaber: Robert Bosch GmbH, 70469 Stuttgart (DE)
(72) Erfinder: VATH, Andreas, 63849 Leidersbach (DE); KLEIN, Andreas, 58455 Wirten (DE); NOLLER, Klaus, 71570 Oppenweiler (DE); BERGER, Günter, 44577 Castrop-Rauxel (DE); STADLER, Burkhard, 58454 Witten (DE)
(74) Vertreter: Thürer, Andreas
(86) Internationale Anmeldenummer: PCT/EP2010/004701
(87) Internationale Veröffentlichungsnummer: WO 2011/042082

(56) Entgegenhaltungen:
- WO-A1-03/031812
- WO-A1-2010/077282
- WO-A2-2009/049599
- DE-U1-202008 002 849
- US-A1- 2009 200 114

## Beschreibung

Die vorliegende Erfindung betrifft einen Antriebsstrang zur Umwandlung der Energie einer Fluidströmung in elektrische Energie, wie er z.B. bei einer Windkraftanlage Verwendung findet, gemäß dem Oberbegriff des Anspruchs 1. Die vorliegende Erfindung betrifft ferner eine Windkraftanlage mit einem solchen Antriebsstrang.

Die zahlreichen Komponenten des Antriebsstrangs einer Windkraftanlage benötigen eine Hilfsfluidversorgung, um ihre einwandfreie Funktion zu gewährleisten. So werden Getriebe, insbesondere die Lager und Zahnräder, aber auch Lager außerhalb des Getriebes oft mit einem Schmierstoff, z.B. Öl versorgt, um einen verschleißarmen, verlustarmen Lauf zu gewährleisten. Auch die Verwendung eines Kühlflüssigkeitskreislaufes zur Kühlung von Getriebe und Generator ist bekannt.

Die WO 2009/049599 A2 zeigt eine Windkraftanlage, bei welcher ein Getriebe und ein Generator mit ihren Gehäusen aneinander angeflanscht sind. Über eine Zwischenplatte sind Kühlkanäle des Generators und Kühlkanäle des Getriebes miteinander verbunden.

Die DE 20 2008 002 849 U1 beschreibt eine Schmieranlage zum Schmieren einer mechanischen Pitcheinstellvorrichtung.

Die WO 03/031812 A1 offenbart eine Getriebeeinheit für den Einsatz in Windkraftanlagen mit einer Trockensumpfschmierung, die aus einem extern angeordneten Vorratsbehälter geschmiert wird.

In der US 2009/0200114 A1 wird ein thermisches Managementsystem und eine Windkraftanlage mit Schmiermittel in einem Getriebegehäuse beschrieben, wobei eine Pumpe das Schmiermittel zirkuliert.

Bekannte Windkraftanlagen verwenden für unterschiedliche Antriebsstrangkomponenten wie ein Rotorlager, ein Getriebe, ein Generator, oft separate, hinsichtlich der Funktionskomponenten getrennte Schmierstoffsysteme. Dies führt zu einer hohen Komplexität des Antriebsstrangs und zu hohen Kosten.

Angesichts des Stands der Technik ist es die Aufgabe der vorliegenden Erfindung einen Antriebsstrang mit einem einfachen und effizienten Schmierstoffsystem anzugeben.

Diese Aufgabe wird durch einen Antriebsstrang mit den Merkmalen des Patentanspruchs 1 gelöst.

Bei dem erfindungsgemäßen Antriebsstrang zur Nutzung der Energie einer Fluidströmung, z.B. in einer Windkraftanlage, ist ein durch die Fluidströmung antreibbarer Rotor, ein Getriebe, welches eingangsseitig direkt oder auch indirekt über die Rotorwelle oder weitere Komponenten an den Rotor angeschlossen ist, und ein an das Getriebe ausgangsseitig angeschlossener Generator vorhanden. Gemäß der Erfindung ist ein Schmierstoffsystem vorhanden, welches nicht nur eine der Antriebsstrangkomponenten selbst sondern eine weitere Antriebsstrangkomponente versorgt. Dadurch lässt sich der Antriebsstrang kostengünstiger und effizienter darstellen. Ist z.B. das Getriebe mit einem Schmierstoffsystem ausgestattet, so lassen sich außerhalb des Getriebes angeordnete Lager oder andere Schmierstellen mit geringem Aufwand an dieses Schmierstoffsystem anbinden. Es wird ein zuverlässiger und verschleißarmer Antriebsstrang zu geringen Kosten erzielt.

Vorteilhafte Ausgestaltungen sind Gegenstand der Unteransprüche.

Vorzugsweise werden die einzelnen Schmierstellen parallel versorgt. So kann ein ausreichender Schmierstoffdruck an jeder Schmierstelle sichergestellt werden.

Ein solcher Schmierstoffkreislauf benötigt vorzugsweise nur eine Pumpe. Es kann aber z.B. für jede Schmierstelle eine eigene Pumpe vorhanden sein, die z.B. jedoch aus einem gemeinsamen Sumpf ansaugen. Zudem können zum Zweck einer hochverfügbaren Schmierstoffversorgung mehrere Pumpen als redundante Schmierstofffördereinrichtungen parallel angeordnet sein. Dies ist insbesondere für Offshore-Windkraftanlagen von Vorteil, da bei solchen aufgrund der hohen Wartungskosten eine Reduzierung von Wartungsterminen angestrebt ist.

Bei Verwendung von gehäuseinternen Kanälen für den Schmierstoff kann dieses zwischen aneinander angeflanschten Komponenten durch z.B. gegenüberliegend an den Anlageflächen angeordnete Mündungen direkt weitergeleitet werden, ohne dass z.B. Schläuche oder eine Verrohrung benötigt werden.

Vorteilhafterweise kann ein Sumpf des Getriebegehäuses als einziges Schmierstoffreservoir des Schmierstoffkreislaufes dienen. Dieser Sumpf kann mit einem Heizelement in thermischen Kontakt stehen, um bei kalter Witterung, das Getriebe und andere Schmierstellen schnell auf Betriebstemperatur zu bringen.

Die Erfindung wird nachstehend anhand eines bevorzugten Ausführungsbeispiels unter Bezugnahme auf die begleitende Zeichnung näher erläutert.

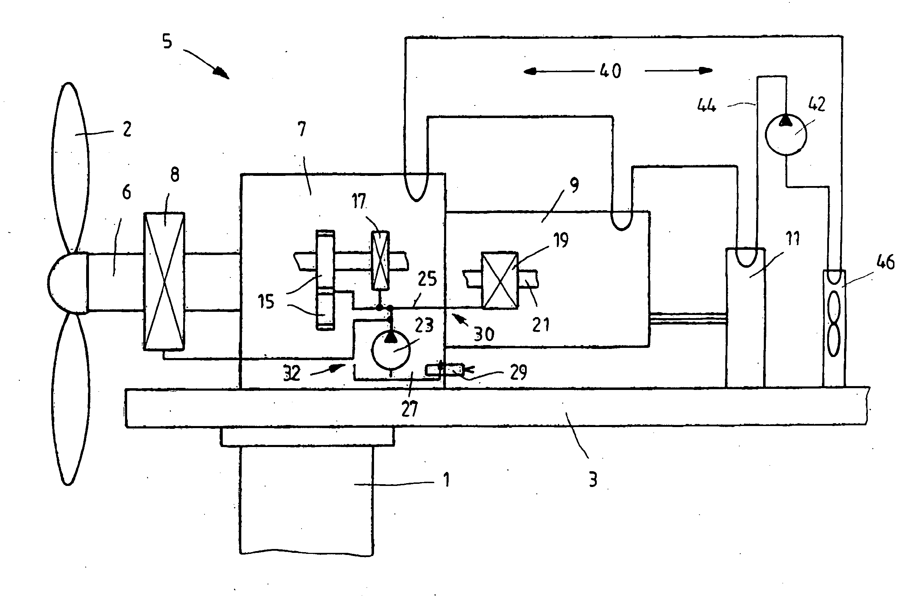

Die einzige Figur zeigt den schematischen Aufbau eines Antriebsstrangs einer Windkraftanlage mit einem Kühlsystem gemäß der vorliegenden Erfindung.

In der Figur ist der Antriebsstrang 5 einer Windkraftanlage auf einer Tragplatte 3 montiert, welche wiederum um eine Azimutachse drehbar auf einem Turm 1 befestigt ist. Die Tragplatte 3 ist Bestandteil einer Gondel, in welcher die Komponenten des Antriebsstrangs 5 baulich zusammengefasst sind. Der Antriebsstrang 5 besitzt einen vom Wind angetriebenen Rotor 2. Der Rotor 2 ist mit einer Rotornabe an einer Rotorwelle 6 befestigt. Die Welle 6 des Rotors 2 ist in einem Lagerblock 8 gelagert und weiter in ein Getriebe 7 geführt. An das Getriebe 7 ist ein Generator 9 angeflanscht. Das Getriebe 7 und der Generator 9 sind über Befestigungseinrichtungen, z.B. Bolzen, Stützen etc. mit der Tragplatte 3 verbunden. Ein Frequenzumrichter 11 ist elektrisch mit dem Generator 9 verbunden. Der Frequenzumrichter 11 steuert den Generator 9 und speist elektrische Energie in das Stromnetz ein.

Im Getriebe 7 sind Zahnräder 15 von Planetenstufen oder Stirnradstufen vorhanden. Zudem sind Lager 17 für Zahnradbolzen, Hohlräder oder Getriebewellen vorhanden. Diese Zahnräder und Lager sind - als Schmierstellen - in der Figur schematisch dargestellt. Auch der Generator 9 besitzt Lager 19 für die Generatorwelle 21, die der Schmierung bedürfen.

Ein Schmiersystem 32 besitzt eine in das Getriebegehäuse eingesetzte oder am Getriebegehäuse angebaute Schmierpumpe 23. Die Schmierpumpe 23 fördert Schmierstoff, z.B. Getriebeöl in die Schmierkanäle 25. Die Schmierkanäle 25 verteilen den Schmierstoff parallel zu den genannten Schmierstellen 15, 17,19 und an den Lagerblock 8. Rücklaufender Schmierstoff wird über nicht dargestellte Kanäle gesammelt und dem Sumpf 27 des Getriebegehäuses zugeführt.

Im Gehäuse des Getriebes 7 ist in thermischen Kontakt mit dem Sumpf 27 ein Heizelement, z.B. ein elektrischer Heizstab 29 angeordnet. Über diesen kann bei kalter Witterung das Getriebeöl auf Arbeitstemperatur gebracht werden. Zudem verteilt das Schmiersystem die Wärme über die Schmierkanäle 25 an die weiteren Schmierstellen auch außerhalb des Getriebes 7, z.B. an die Lager 8 und 19 und sorgt so für einen verschleißarmen Betrieb des Antriebsstrangs 5.

Alternativ kann das Getriebe 7 ohne Sumpf ausgeführt sein. Dann wäre anstelle des Sumpfes 27 ein externer Schmierstofftank vorhanden und die Schmierpumpe 23 würde aus diesem Behälter ansaugen.

Im Flanschbereich 30 zwischen dem Getriebe 7 und dem Generator 9 tritt ein Schmierstoffkanal vom Gehäuse des Getriebes 7 direkt in das Gehäuse des Generators 9 über. Zwischen den Gehäusen sind (in der Figur nicht dargestellte) Dichtungen angeordnet. So können Verrohrungen oder Schläuche eingespart werden. Diese Art der Schmierstoffkanalführung kann, falls ein Lager der Rotorwelle 6 direkt an das Getriebegehäuse angeflanscht ist, auch zwischen Getriebe 7 und Lager 8 eingesetzt werden.

Zusätzlich zum Schmiersystem 32 ist als weiteres Hilfsfluidsystem ein Kühlsystem 40 vorhanden. Das Kühlsystem 40 besitzt eine Kühlmittelpumpe 42 welche ein Kühlmittel, z.B. Wasser, Glykol, oder ein Kältemittel durch einen Kühlmittelkreislauf bzw. eine Kühlmittelleitung 44 fördert. Die Kühlmittelleitung 44 ist nacheinander an Wärmeüberträgerelemente des Frequenzumrichters 11, des Generators 9 und des Getriebes 7 angeschlossen. Die genannten Komponenten 11, 9 und 7 sind im Kühlmittelkreislauf in Reihe geschalten. Im Rücklauf, stromab des Getriebes 7, durchläuft die Kühlmittelleitung 44 einen Kühler 46, in dem das umlaufend geförderte Kühlmittel gekühlt wird, und welcher dadurch, die in den Komponenten 11,9 und 7 ins Kühlmittel eingetragene Wärme an die Umgebung, vorzugsweise an die Luft außerhalb der Gondel abgibt. Der Kühler 46 kann einen Ventilator aufweisen. Er kann auch bzw. alternativ mit einer Kühlrippenstruktur für eine passive Wärrmeabgabe ausgestattet sein.

Das Wärmeüberträgerelement im Frequenzumrichter 11 kann eine Kühlplatte sein, an die z.B. Leistungshalbleiter thermisch gekoppelt sind. Im Generator 9 kann eine Kühlkanalstruktur einer Statorwicklung bzw. ein Träger der Statorwicklung als Wärmeüberträgerelement dienen. Im Getriebe 7 kann ein Gehäusemantel oder ein Ölkühler als Wärmeüberträgerelement an den Kühlkreislauf angebunden sein.

Die Reihenfolge der Komponenten 11, 9 und 7 in der Reihenschaltung des Kühlkreislaufs richtet sich nach der maximalen im Betrieb tolerierbaren Arbeitstemperatur der Komponente. Allgemein sind elektronische bzw. leistungselektronische Komponenten wie der Frequenzumrichter 11 empfindlicher gegenüber hohen Betriebstemperaturen als elektromechanische oder mechanische Komponenten wie der Generator 9 oder das Getriebe 7. Daher ist die Reihenfolge im Kühlmittelkreislauf Frequenzumrichter 11, Generator 9 und letztlich Getriebe 7. Die Reihenfolge kann aber im Rahmen der Spezifikationen der Komponenten geändert werden.

Die Kühlmittelleitung 44 kann durch Kanäle im Gehäuse der jeweiligen Komponenten, z.B. im Generatorgehäuse oder im Getriebegehäuse geführt sein. Sind z.B. die Komponenten 7 und 9 aneinander angeflanscht, können Mündungen gebildet sein, die im Flanschbereich an aneinander anliegenden Gehäusestirnflächen von Getriebe 7 und Generator 9 gegenüberliegend angeordnet sind und mit einer Dichtung gegen einen Spalt zwischen den Gehäusen abgedichtet sind. Dadurch kann Kühlmittel von einem Gehäusekanal in einen Kanal des anderen Gehäuses übergeleitet werden, ohne dass eine Verrohrung erforderlich wäre.

Bei dem erfindungsgemäßen Antriebsstrang zur Nutzung der Energie einer Fluidströmung, z.B. in einer Windkraftanlage, ist ein durch die Fluidströmung antreibbarer Rotor, ein Getriebe, welches eingangsseitig direkt oder auch indirekt über die Rotorwelle oder weitere Komponenten an den Rotor angeschlossen ist, und ein an das Getriebe ausgangsseitig angeschlossener Generator vorhanden. Gemäß der Erfindung ist ein Schmierstoffsystem vorhanden, welches nicht nur eine der Antriebsstrangkomponenten selbst sondern eine weitere Antriebsstrangkomponente versorgt. Dadurch lässt sich der Antriebsstrang kostengünstiger und effizienter darstellen. Ist z.B. das Getriebe mit einem Schmierstoffsystem ausgestattet, so lassen sich außerhalb des Getriebes angeordnete Lager oder andere Schmierstellen mit geringem Aufwand an dieses Schmierstoffsystem anbinden. Es wird ein zuverlässiger und verschleißarmer Antriebsstrang zu geringen Kosten erzielt.

Die vorangehend beschriebenen Ausführungsbeispiele und Figuren dienen lediglich dem besseren Verständnis der vorliegenden Erfindung, sie schränken die Erfindung nicht etwa auf die Ausführungsbeispiele ein. Die Figuren sind teilweise grob schematisch gehalten, der Effekt bzw. die Auswirkungen zum Teil deutlich vergrößert bzw. übertrieben dargestellt, um die Funktionsweisen, Wirkprinzipien, technischen Ausgestaltungen und Merkmale zu verdeutlichen. Grundsätzlich kann jede Funktionsweise, jedes Prinzip, jede technische Ausgestaltung und jedes Merkmal, welches/welche in den Figuren oder im Text gezeigt ist/sind, mit allen Ansprüchen, jedem Merkmal im Text und in den anderen Figuren, anderen Funktionsweisen, Prinzipien, technischen Ausgestaltungen und Merkmalen, die in dieser Offenbarung enthalten sind oder sich daraus ergeben, frei und beliebig kombiniert werden, so dass alle denkbaren Kombinationen dem Offenbarungsumfang der Erfindung hinzuzurechnen sind. Dabei sind auch Kombinationen zwischen allen einzelnen Ausführungen im Text, d.h. in jedem Abschnitt des Beschreibungstexts, in den Ansprüchen und auch Kombinationen zwischen verschiedenen Ausführungsbeispielen im Text, in den Ansprüchen und in den Figuren umfasst.

Auch die Ansprüche begrenzen bzw. limitieren nicht die Offenbarung und damit die Kombinationsmöglichkeiten aller aufgezeigten Merkmale untereinander. Alle aufgezeigten Merkmale sind explizit auch einzeln und in Kombination mit allen anderen Merkmalen der Erfindung von dieser Offenbarung umfasst.

## Patentansprüche

1. Antriebsstrang zur Nutzung der Energie einer Fluidströmung, insbesondere in einer Windkraftanlage, umfassend als Antriebsstrangkomponenten ein Getriebe (7), welches eingangsseitig an einen durch die Fluidströmung angetriebenen Rotor (2) angeschlossen ist, und einen an das Getriebe (7) ausgangsseitig angeschlossenen Generator (9); und umfassend ein Schmierstoffsystem (32) zur Versorgung einer der Antriebsstrangkomponenten (7) mit einem Schmierstoff, wobei zumindest eine weitere Antriebsstrangkomponente (8, 9) vom Schmiersystem (32) mit Schmierstoff versorgbar ist,
**dadurch gekennzeichnet, dass**
ein Gehäuse des Getriebes (7) und ein Gehäuse des Generators (9) aneinander angeflanscht sind und dass im jeweiligen Flanschbereich (30) der Gehäuse Schmierstoffkanäle münden, die so angeordnet sind, dass sie einen Transport von Schmierstoff von dem einen Gehäuse in das andere Gehäuse erlauben.

2. Antriebsstrang nach Anspruch 1, **dadurch gekennzeichnet, dass** die Antriebsstrangkomponenten (7, 8, 9) bezüglich eines Schmierstoffkreislaufs (25) parallel geschaltet sind.

3. Antriebsstrang nach einem der vorhergehenden Ansprüche, **dadurch gekennzeichnet, dass** der Schmierstoffkreislauf (25) eine einzige Schmierstofffördereinrichtung, insbesondere eine Pumpe (23) aufweist.

4. Antriebsstrang nach einem der vorhergehenden Ansprüche, **dadurch gekennzeichnet, dass** der Schmierstoffkreislauf (25) mehrere Schmierstofffördereinrichtungen, insbesondere in paralleler oder serieller Anordnung, insbesondere in redundanter Anordnung, insbesondere Pumpen, für den Schmierstoff umfasst.

5. Antriebsstrang nach einem der vorhergehenden Ansprüche, **dadurch gekennzeichnet, dass** als weitere Antriebsstrangkomponenten Lager für den Rotor (2) und/oder Lager (8) für eine Abtriebswelle (6) des Rotors (2) und/oder Lager für eine Verbindungswelle zwischen dem Getriebe (7) und dem Generator (9) und/oder der Generator (9) vorhanden sind, und dass solche Lager bzw. Antriebsstrangkomponenten von dem Schmierstoffsystem (32) mit Schmierstoff versorgt werden.

6. Antriebsstrang nach einem der vorhergehenden Ansprüche, **dadurch gekennzeichnet, dass** in einem Gehäuse des Getriebes (7) ein Sumpf (27) als ein, insbesondere als ein einziges Reservoir für das Schmierstoffsystem (32) gebildet ist.

7. Antriebsstrang nach Anspruch 6, **dadurch gekennzeichnet, dass** im oder am Gehäuse des Getriebes (7) eine Schmierölpumpe (23) des Schmierstoffsystems (32) angeordnet ist.

8. Antriebsstrang nach Anspruch 6 oder 7, **dadurch gekennzeichnet, dass** im Gehäuse des Getriebes (7) ein mit dem Sumpf (27) in thermischer Verbindung stehendes Heizelement (29) angeordnet ist.

9. Antriebsstrang nach einem der vorhergehenden Ansprüche, **dadurch gekennzeichnet, dass** einem Lager (19) einer Welle im Generator (9) Schmierstoff durch das Schmierstoffsystem (32) zuführbar ist.

10. Windkraftanlage, **gekennzeichnet durch** einen Antriebsstrang (5) nach einem der Ansprüche 1 bis 9.

## Claims

1. Drive train for harnessing the energy of a fluid flow, in particular in a wind turbine, comprising as drive train components a transmission (7) that is connected on the input side to a rotor (2) that is driven by the fluid flow and comprising a generator (9) connected to the transmission (7) on the output side and further comprising a lubrication system (32) for supplying any one of the drive train components (7) with a lubricant, at least one further drive train component (8, 9) being able to be supplied with lubricant by the lubrication system (32), **characterized in that** a housing of the transmission (7) and a housing of the generator (9) are flange mounted one to the other and **in that** lubrication channels issue into the respective flange area (30) of the housing, which lubrication channels are arranged in such a manner that they allow lubricant to be conveyed from one housing to the other housing.

2. Drive train according to Claim 1, **characterized in that** the drive train components (7, 8, 9) are connected in parallel with respect to a lubrication circuit (25).

3. Drive train according to any one of the preceding claims, **characterized in that** the lubrication circuit (25) comprises a single lubricant delivery device, in particular a pump (23).

4. Drive train according to any one of the preceding claims, **characterized in that** the lubrication circuit (25) comprises a plurality of lubricant delivery devices, in particular in a parallel or a serial arrangement, in particular in a redundant arrangement, in particular pumps, for the lubricant.

5. Drive train according to any one of the preceding claims, **characterized in that** bearings for the rotor (2) and/or bearings (8) for an output shaft (6) of the rotor (2) and/or bearings for a connecting shaft between the transmission (7) and the generator (9) and/or the generator (9) are provided as further drive train components, and that bearings of this type or rather drive train components are supplied with lubricant by the lubrication system (32).

6. Drive train according to any one of the preceding claims, **characterized in that** in a housing of the transmission (7) a sump (27) is embodied as a reservoir, in particular as a single reservoir, for the lubrication system (32).

7. Drive train according to Claim 6, characterized that that a lubrication oil pump (23) of the lubrication system (32) is arranged in the housing or on the housing of the transmission (7).

8. Drive train according to Claim 6 or 7, **characterized in that** a heating element (29) is thermally connected to the sump (27) and is arranged in the housing of the transmission (7).

9. Drive train according to any one of the preceding claims, **characterized in that** lubricant can be delivered to a bearing (19) of a shaft in the generator (9) by virtue of the lubrication system (32).

10. Wind turbine, **characterized by** a drive train (5) according to any one of Claims 1 to 9.

## Revendications

1. Chaîne cinématique pour l'utilisation de l'énergie d'un écoulement de fluide, en particulier dans une installation éolienne, comprenant, en tant que composants de la chaîne cinématique, une transmission (7) qui est raccordée du côté de l'entrée à un rotor (2) entraîné par l'écoulement de fluide, et un générateur (9) raccordé à la transmission (7) du côté de la sortie ; et comprenant un système de lubrifiant (32) pour l'alimentation en lubrifiant d'un des composants de la chaîne cinématique (7), au moins un composant supplémentaire de la chaîne cinématique (8, 9) pouvant être alimenté en lubrifiant par le système de lubrifiant (32),
**caractérisée en ce**
**qu'**un boîtier de la transmission (7) et un boîtier du générateur (9) sont raccordés l'un à l'autre par bridage et en ce que dans la région de bride respective (30) des boîtiers débouchent des canaux de lubrification qui sont disposés de telle sorte qu'ils permettent un transport de lubrifiant depuis l'un des boîtiers dans l'autre boîtier.

2. Chaîne cinématique selon la revendication 1, **caractérisée en ce que** les composants de la chaîne cinématique (7, 8, 9) sont montés en parallèle par rapport à un circuit de lubrifiant (25).

3. Chaîne cinématique selon l'une quelconque des revendications précédentes, **caractérisée en ce que** le circuit de lubrifiant (25) présente un dispositif de transport de lubrifiant unique, notamment une pompe (23).

4. Chaîne cinématique selon l'une quelconque des revendications précédentes, **caractérisée en ce que** le circuit de lubrifiant (25) comprend plusieurs dispositifs de transport de lubrifiant, en particulier suivant un agencement en parallèle ou en série, en particulier suivant un agencement redondant, en particulier des pompes, pour le lubrifiant.

5. Chaîne cinématique selon l'une quelconque des revendications précédentes, **caractérisée en ce que** des paliers pour le rotor (2) et/ou des paliers (8) pour un arbre de sortie (6) du rotor (2) et/ou des paliers pour un arbre de liaison entre la transmission (7) et le générateur (9) et/ou le générateur (9) sont prévus en tant que composants supplémentaires de la chaîne cinématique et **en ce que** de tels paliers ou composants de la chaîne cinématique sont alimentés en lubrifiant par le système de lubrifiant (32).

6. Chaîne cinématique selon l'une quelconque des revendications précédentes, **caractérisée en ce qu'**un carter (27) est formé dans un boîtier de la transmission (7) en tant que réservoir, en particulier en tant que réservoir unique, pour le système de lubrifiant (32).

7. Chaîne cinématique selon la revendication 6, **caractérisée en ce qu'**une pompe à huile de lubrification (23) du système de lubrifiant (32) est disposée dans ou sur le boîtier de la transmission (7).

8. Chaîne cinématique selon la revendication 6 ou 7, **caractérisée en ce qu'**un élément chauffant (29) en liaison thermique avec le carter (27) est disposé dans le boîtier de la transmission (7).

9. Chaîne cinématique selon l'une quelconque des revendications précédentes, **caractérisée en ce que** du lubrifiant peut être acheminé par le système de lubrifiant (32) à un palier (19) d'un arbre dans le générateur (9).

10. Installation éolienne, **caractérisée par** une chaîne cinématique (5) selon l'une quelconque des revendications 1 à 9.
